# DEMANDE DE BREVET EUROPEEN

(11) **EP 2 136 412 A2**
(43) Date de publication de la demande: **23.12.2009**
(21) Numéro de dépôt: 09305262.9
(22) Date de dépôt: 24.03.2009
(51) Int. Cl.: H01L 31/048

(54) **Perfectionnement aux moyens supports pour la pose de panneaux solaires**

(30) Priorité: 18.06.2008 FR 0803408
(71) Demandeur: Le Noelle Environnement, 44150 Ancenis (FR); Babonneau, Gilles, 49170 Saint Laurent des Autels (FR)
(72) Inventeur: Babonneau, Gilles, 49170, SAINT LAURENT DES AUTELS (FR)
(74) Mandataire: Michelet, Alain

(57) **Abrégé**

Le dispositif support conforme à l'invention est caractérisé par le fait qu'il comprend une juxtaposition de plaques parallélépipédiques autoporteuses (7), identiques, dont la face inférieure (18) est destinée à être fixée sur un bâti, par exemple la charpente d'une toiture, et dont la face supérieure (17) est destinée à être recouverte par des panneaux solaires.
Ces plaques (7) sont délimitées chacune par deux bordures transversales parallèles (10, 11) et par deux bordures longitudinales parallèles (8, 9), lesquelles bordures longitudinales (8, 9) comportent, sur toute leur longueur, une structure de chevron (12, 16), en saillie vers le haut. Ces structures de chevron (12, 16) ont une section en U inversé qui est croissante d'une bordure transversale (10) à l'autre (11), formant une structure dite en queue de billard pour permettre un recouvrement partiel desdites plaques (7) au niveau de leurs bordures transversales (10, 11); d'autre part, la section intérieure de l'une desdites structures de chevron (12), dite chevron latéral de grande dimension correspond, au jeu près, à la section extérieure de l'autre structure de chevron (16), dite chevron latéral de petite dimension, pour permettre un recouvrement partiel desdites plaques (7) au niveau de leurs bordures longitudinales (8, 9), par encastrement dudit chevron latéral de petite dimension (16) au sein dudit chevron latéral de grande dimension (12).

## Description

La présente invention concerne le domaine de la pose des panneaux solaires, du type photovoltaïques ou thermiques, notamment sur les toitures de bâtiments ; elle concerne en particulier un dispositif support original permettant la réception de tels panneaux solaires et leur intégration au sein de la toiture équipée.

Parmi les produits connus sur le marché, certains panneaux solaires photovoltaïques sont conçus comme des « tuiles » d'environ 1 m² de surface, dont l'étanchéité est assurée par des profilés latéraux en aluminium dotés de gorges et par un recouvrement amont/aval avec joint d'étanchéité en caoutchouc. Cependant, ces systèmes s'avèrent insuffisamment efficaces, notamment en cas de faible pente de toit, mais également du fait de phénomènes de condensation sur la face inférieure des panneaux photovoltaïques.

Pour remédier à ces inconvénients, les fabricants préconisent la pose d'un film souple étanche, recouvert d'un système de chevronnage en bois sur lequel sont fixés les crochets supportant les panneaux photovoltaïques eux-mêmes.

Mais ce montage est lourd, complexe et il ne permet pas de garantir l'absence de fuites, en particulier en cas de faible pente, notamment inférieure à 20°.

Le but de la présente invention est de proposer un produit de sous-toiture résistant, léger, simple et rapide à poser, assurant conjointement une bonne étanchéité tout en permettant de fixer par-dessus des panneaux solaires photovoltaïques ou thermiques, l'ensemble constituant une structure d'architecture indissociable susceptible d'assurer la couverture de tous types de bâtiments (industriels, agricoles, immeubles, maisons d'habitation, appentis ...).

Pour cela, le dispositif support conforme à l'invention comprend une juxtaposition de plaques parallélépipédiques autoporteuses, identiques, dont la face inférieure est destinée à être fixée sur un bâti, par exemple la charpente d'une toiture, et dont la face supérieure est destinée à être recouverte par des panneaux solaires ; ces plaques autoporteuses sont délimitées chacune par deux bordures transversales parallèles et par deux bordures longitudinales parallèles, lesquelles bordures longitudinales comportent, sur leur longueur, une structure de chevron en saillie vers le haut ; ces structures de chevron latérales ont une section en U inversé qui est croissante d'une bordure transversale à l'autre, formant une structure dite en queue de billard, pour permettre un recouvrement partiel desdites plaques au niveau de leurs bordures transversales ; d'autre part, la section intérieure de l'une desdites structures de chevron, dite chevron latéral de grande dimension correspond, au jeu près, à la section extérieure de l'autre structure de chevron, dite chevron latéral de petite dimension, pour permettre un recouvrement partiel desdites plaques au niveau de leurs bordures longitudinales, par encastrement dudit chevron latéral de petite dimension au sein dudit chevron latéral de grande dimension.

De préférence, ce dispositif support comprend des plaques autoporteuses munies, entre leurs deux structures de chevron latérales, d'au moins une structure de chevron complémentaire, en U inversé, parallèle(s) auxdites structures de chevron latérales et de forme générale également en queue de billard, l'une au moins desdites structures de chevrons complémentaires ayant une hauteur identique à celle du chevron latéral de grande dimension.

Selon une autre particularité, les plaques autoporteuses sont munies de nervures de rigidification, ménagées entre leurs structures de chevrons. Avantageusement, au moins certaines de ces nervures de rigidification s'étendent selon une direction qui est perpendiculaire auxdites structures de chevrons.

L'invention concerne également les plaques autoporteuses pour un tel dispositif support, lesquelles plaques ont une structure telle que définie ci-dessus, avec des chevrons en saillie vers le haut dont la section en U inversé est croissante d'une bordure transversale à l'autre, et dont les chevrons latéraux ont des sections en U complémentaires, pour permettre un recouvrement partiel de plaques identiques, tant au niveau de leurs bordures transversales qu'au niveau de leurs bordures longitudinales.

De préférence, dans la plaque autoporteuse en question, au moins la structure de chevron latérale de grande dimension est équipée, côté intérieur, d'un insert métallique de renfort à section en U.

Selon une autre particularité, toutes les structures de chevrons parallèles de la plaque sont équipées, côté intérieur, d'un insert métallique de renfort, à section en U, à l'exception du chevron latéral de petite dimension.

Selon une forme de réalisation possible, la plaque est réalisée en résine armée de fibre de verre. Sa face supérieure est alors avantageusement recouverte d'une couche de matériau protecteur, par exemple un « gel-coat » de finition constitué d'une résine polyester à base d'acide tétrahydrophtalique ou isophtalique.

Selon une variante de réalisation, la plaque est réalisée par moulage de matière plastique (par exemple par une technique de thermoformage ou de moulage-injection).

L'invention concerne également la structure de toiture comportant un dispositif support tel que défini ci-dessus, obtenu par un assemblage de plaques autoporteuses telles que décrites ci-avant, lequel dispositif support est fixé sur une charpente, recouvert d'une juxtaposition de panneaux solaires fixés sur les faces de dessus de certaines au moins des structures de chevron desdites plaques autoporteuses.
De préférence, les panneaux solaires sont fixés sur la juxtaposition de plaques autoporteuses au moyen de crochets adaptés pour assurer un positionnement du type « en écaille », avec un recouvrement partiel des panneaux amont sur les panneaux aval.

L'invention sera encore illustrée, sans être aucunement limitée, par la description suivante, en association avec les dessins annexés dans lesquels :
- la figure 1 est une vue générale en perspective d'une structure de toiture comprenant un dispositif support conforme à l'invention, posé sur une charpente et recevant une juxtaposition de panneaux solaires ;
- la figure 2 est une vue isolée, en perspective, de l'une des plaques autoporteuses constitutives du dispositif support conforme à l'invention ;
- la figure 3 est une vue d'extrémité de la plaque illustrée figure 2, détaillant sa structure constitutive ;
- la figure 4 est une vue agrandie d'une partie de la figure 1 détaillant la structure d'un crochet de fixation des panneaux solaires et le montage « en écaille » de ces panneaux sur le dispositif support ;
- la figure 5 est une vue en perspective d'une variante de réalisation d'une plaque autoporteuse conforme à l'invention.

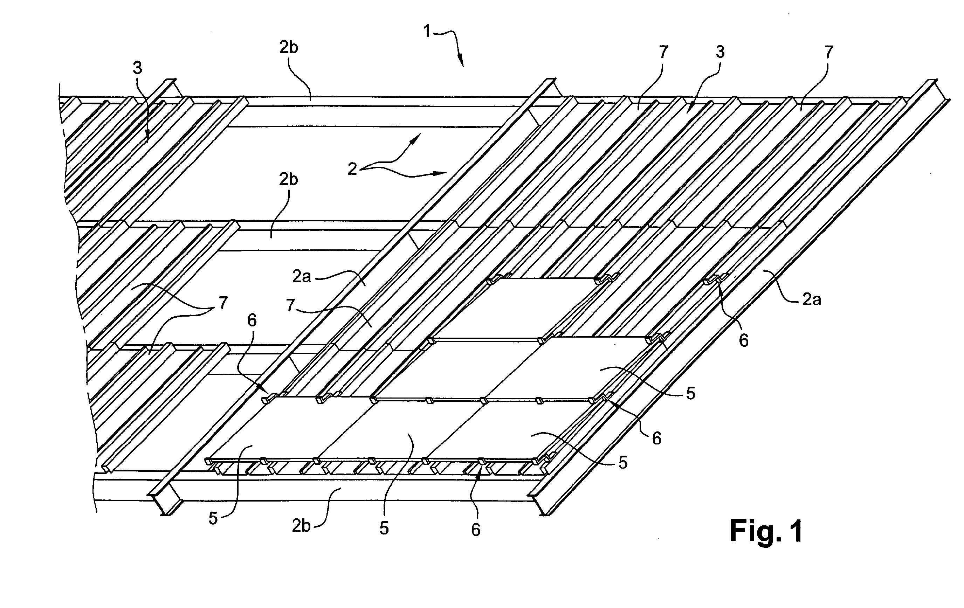

Tel qu'illustré sur la figure 1, la structure de toiture 1 comprend une charpente 2 (formée de longerons métalliques 2a en pente, assemblés par des pannes horizontales 2b en bois) intégralement recouverte par un dispositif 3 assurant l'étanchéité et constituant une structure support pour des panneaux solaires 5. Ces panneaux solaires 5 de type photovoltaïques ou thermiques, sont avantageusement fixés au moyen de pièces de liaison 6, assurant leur juxtaposition selon un montage « en écaille », avec un léger recouvrement des panneaux amont sur les panneaux aval.

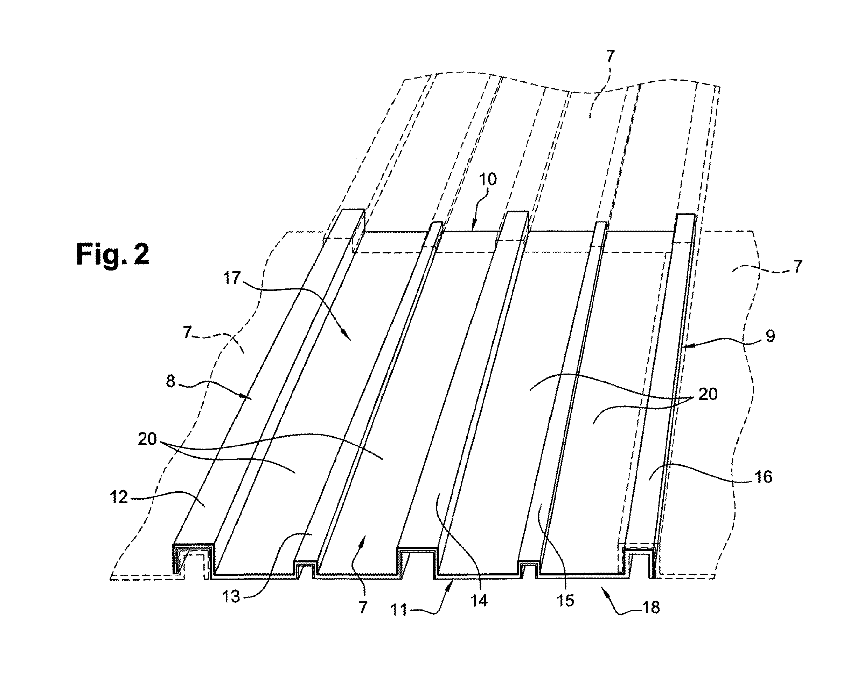

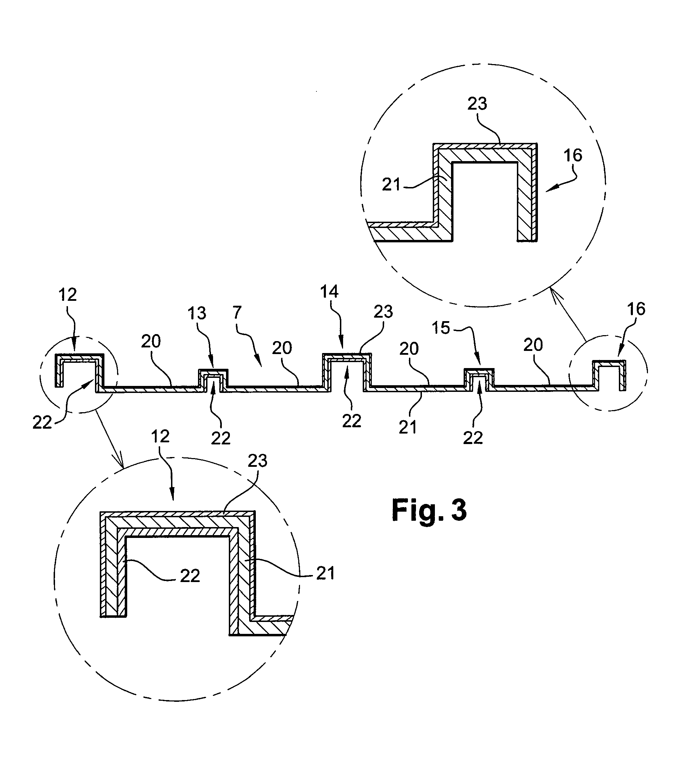

Le dispositif support 3 forme une sorte de sous-toiture constituée d'une juxtaposition de plaques 7 ayant une forme générale carrée ou rectangulaire, détaillées sur les figures 2 et 3, qui sont structurées pour permettre leur recouvrement mutuel partiel tant au niveau de leurs bordures latérales longitudinales qu'au niveau de leurs bordures d'extrémités (en amont et en aval de la pente).

Comme on peut le voir sur la figure 2, chaque plaque support 7 est délimitée par deux bordures longitudinales parallèles 8, 9 et par deux bordures transversales d'extrémités, également parallèles, l'une dite « amont » 10 (destinée à être positionnée côté faîtage) et l'autre dite « aval » 11.

Cette plaque 7 comprend une pluralité de chevrons (ou gouttières) 12, 13, 14, 15 et 16, à section en U inversé, agencées parallèlement les unes aux autres et qui s'étendent en saillie du côté de la face supérieure 17 (et donc en creux côté face inférieure 18).

Ces structures de chevron 12 à 16 s'étendent sur toute la longueur de la plaque 7, entre ses deux bordures transversales d'extrémités 10 et 11. Leur section est légèrement décroissante de la bordure aval 11 vers la bordure amont 10 pour leur conférer une forme générale dite en « queue de billard » autorisant un recouvrement partiel longitudinal des plaques 7, dans l'alignement les unes des autres.

Les bordures longitudinales 8 et 9 de la plaque 7 comportent chacune l'une des structures de chevron, respectivement 12 et 16. Une autre structure de chevron centrale 14 est ménagée sur l'axe médian longitudinal de la plaque 7 et deux structures de chevron intermédiaires 13 et 15 s'étendent de manière centrée entre ladite structure de chevron centrale 14 et lesdites structures de chevron latérales 12 et 16.

La section interne de la structure de chevron latérale 12 correspond, au jeu près, à la section externe de la structure de chevron latérale 16, de manière à permettre un encastrement ou emboitement latéral de deux plaques 7 identiques juxtaposées, et autoriser ainsi le recouvrement partiel latéral de ces plaques 7 juxtaposées.
La structure de chevron latérale 12 a donc des dimensions plus importantes que la structure de chevron latérale 16 en vis-à-vis.

On notera que la structure de chevron centrale 14 a des dimensions identiques à celles de la structure de chevron latérale 12 (de grande dimension), alors que les structures de chevron intermédiaires 13 et 15 sont plus petites, tant en largeur qu'en hauteur.

La base des structures de chevron 12 à 16 est reliée par des volets de matière 20 qui s'étendent dans le même plan.

Tel qu'illustré sur la figure 3, les plaques supports 7 sont obtenues par moulage d'une couche de résine armée 21 sur des profilés métalliques 22, l'ensemble étant recouvert d'une couche de matériau protecteur 23.

La résine utilisée pour la couche de base 21 est avantageusement une résine polyester. Son armature est de préférence de la fibre de verre (mât non tissé de fibres de verre ou tissu de fibres de verre). Cette couche 21 de résine polymérisée rigidifiée par la fibre de verre présente avantageusement une épaisseur uniforme sur toute la surface de la plaque 7, par exemple de l'ordre de 2 mm.
A titre indicatif, la couche de résine armée 21 peut être réalisée, dans une structure de moulage, par mise en oeuvre des opérations successives suivantes, après positionnement correct des profilés 22 :
- dépose d'une couche de résine
- pose de fibre de verre (1 ère couche)
- dépose d'une couche de résine
- pose de fibre de verre (2^{ème} couche)
- dépose d'une couche de résine
- ébullage
- séchage
- projection de matériau de protection 23 (gel-coat)
- débardage
- démoulage

La couche de matériau protecteur 23 constitue le revêtement côté supérieur de la plaque 7. Elle est avantageusement constituée d'un « gel-coat » de finition en résine de type polyester à base d'acide tétrahydrophtalique ou isophtalique.
Cette couche protectrice supérieure 23 a une épaisseur constante sur toute la surface de la plaque 7, de l'ordre de 0,5 à 1 mm.

Les profilés métalliques 22 sont réalisés en acier galvanisé de l'ordre de 1,5 mm d'épaisseur. Ces profilés 22 « tapissent » la face intérieure des structures de chevron 12 à 15. On notera que la structure de chevron latérale de petit dimension 16 ne comporte pas de profilé métallique de renfort, du fait qu'elle est destinée à être associée par emboîtement avec un profilé latéral 12 de grande dimension d'une plaque 7 juxtaposée.

Les volets 20 qui relient les structures de chevron 12 à 16 sont uniquement composés d'une superposition des deux couches de résine 21 et 23.

D'une manière générale, la plaque 7 peut avoir une largeur de l'ordre de 1520 mm et une hauteur de l'ordre de 1500 mm (ces dimensions peuvent être modifiées en fonction de l'écartement des pannes sur les bâtiments que l'on souhaite équiper). Chaque plaque 7 peut par exemple permettre la pose de deux panneaux solaires 5 de dimension classique.

La plaque 7 formée des profilés métalliques 22 intégrés dans la résine rigidifiée par la fibre de verre est étanche, très résistante et légère.

Pour la réalisation du dispositif support 3, les plaques 7 s'emboîtent par chevauchement latéral (structure de chevron 16 dans structure de chevron 12 d'une plaque juxtaposée), et par recouvrement amont/aval, par exemple de 150 à 200 mm, par le système de chevrons en queue de billard, pour obtenir l'étanchéité de l'ensemble de la surface couverte.
Cette juxtaposition de plaques 7 avec chevauchement partiel est détaillée sur la figure 2 au niveau de laquelle la plaque 7 représentée en traits forts est associée à trois autres plaques 7 adjacentes représentées en pointillés, de manière partielle.

Les plaques 7 sont fixées sur les pannes 2b de la charpente 2 par vissage direct au moyen de vis auto-taraudeuses bois-métal ; cette fixation est de préférence réalisée au niveau des structures de chevron 12, 14 et 15.

Une fois le dispositif support 3 posé, les faces supérieures des structures de chevron 12, 14 et 16-12 s'étendent dans le même plan.

On notera que la jonction entre les plaques 7 peut être étanchée par une structure de joint adaptée, au niveau de leur zone de recouvrement, par exemple par une résine polymérisée ; cette structure de joint est en particulier intéressante en cas de faible pente de toit.

Les pièces de liaison 6 qui permettent la réception des panneaux solaires 5 sont fixées sur la partie supérieure des structures de chevron 12, 14 et 16-12.

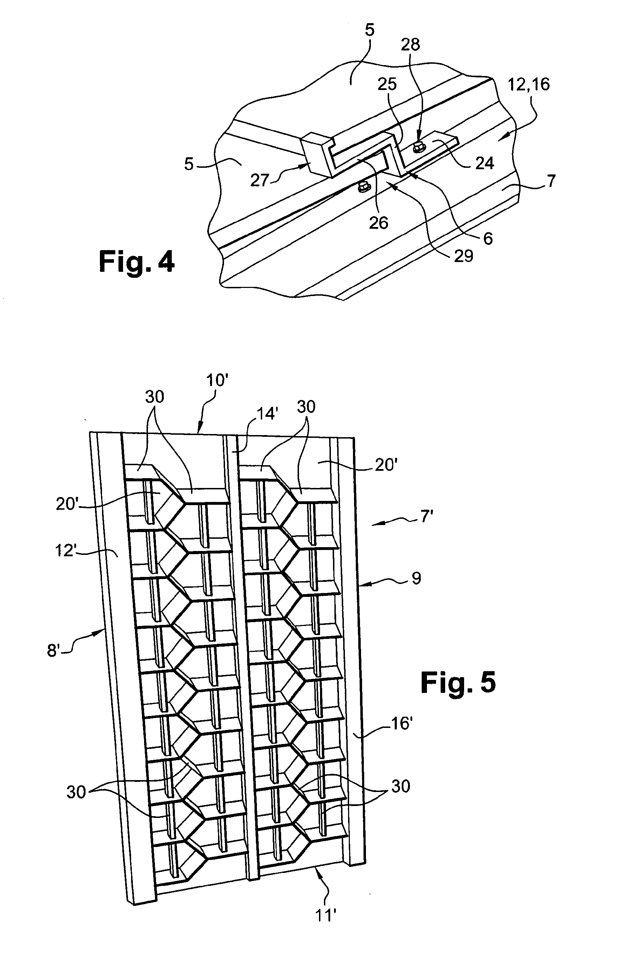

Comme détaillé sur la figure 4, chaque pièce de liaison 6 se présente sous la forme d'un crochet constitué d'une embase 24 dont l'une des extrémités se prolonge par un retour à l'équerre 25 orienté vers le haut, lui-même prolongé par une extension 26 qui se termine par un élément de crochetage 27 orienté en direction de l'embase 24. L'extension 26 s'étend parallèlement ou sensiblement parallèlement à l'embase 24.
Ces crochets 6 sont fixés sur la structure de chevron 12, 14 et 16 des plaques 7 par l'intermédiaire de leur embase 24, au moyen de vis auto taraudeuses 28 avec joint d'étanchéité. La face supérieure de l'extension 26 sert de support pour la bordure inférieure des panneaux 5, le chant inférieur de ces panneaux 5 venant prendre appui contre l'élément de crochetage 27.
D'autre part, le logement inférieur 29 formé par l'extension 26, le retour 25 et la structure de chevron 12, 14, 16 des plaques 7 sert à l'encastrement de la bordure supérieure des panneaux 5 directement disposés en aval.
Latéralement, les panneaux solaires 5 sont positionnés bord à bord (associés éventuellement à un joint d'étanchéité) ; dans la pente, ils sont montés avec un léger recouvrement amont sur aval, pour obtenir une structure en écaille ou en tuile (visible sur les figures 1 et 4).
Un tel montage participe à l'étanchéité de la structure de toiture et assure une ventilation correcte sous les panneaux solaires 5.

Les panneaux solaires 5 peuvent aussi être fixés sur le dispositif support 3 par tout autre moyen approprié.

La figure 5 illustre une variante de réalisation d'une plaque autoporteuse conforme à l'invention.

La plaque 7' correspondante, vue en perspective du côté de sa face supérieure, est réalisée par moulage de matière plastique, par une technique de thermoformage ou de moulage-injection. Par exemple, elle est réalisée en polyester translucide de catégorie M1.

Cette plaque 7' a une structure très voisine de celle de la plaque 7 décrite précédemment. Elle est délimitée par deux bordures transversales parallèles 10', 11' et par deux bordures longitudinales parallèles 8', 9'. Ces bordures longitudinales 8' et 9' comportent, sur toute leur longueur, une structure de chevron 12', 16' en saillie vers le haut. Ces structures de chevron 12' et 16' ont une section en U inversé qui est croissante de la bordure transversale 10' à l'autre 11', formant une structure dite en queue de billard. D'autre part, la section intérieure de la structure de chevron latérale de grande dimension 12' correspond, au jeu près, à la section extérieure de la structure de chevron 16' de petite dimension.
Une structure de chevron complémentaire 14' est centrée entre les deux structures de chevron latérales 12', 16'. Cette structure de chevron centrale 14' a une hauteur qui correspond à celle de la structure de chevron de grande dimension 12', elle présente également une section en forme de U inversé dont la section est croissante depuis la bordure transversale 10' jusqu'à la bordure transversale 11'.
Sur les volets 20' qui relient les structures de chevron latérales 12', 16' à la structure de chevron centrale 14', on remarque la présence de nervures de rigidification 30, formant raidisseurs.
La forme et l'orientation des nervures 30 sont adaptées pour optimiser les caractéristiques de résistance de la plaque autoporteuse 7'. Comme on peut le voir sur la figure 5, au moins certaines de ces nervures 30 s'étendent dans une direction qui est perpendiculaire à celle des structures de chevron 12', 14', 16'.

Comme pour le mode de réalisation précédent, la face interne des structures de chevron 12' et 14' reçoit un profilé métallique de renfort (non visible sur la figure 5), par exemple réalisé en acier galvanisé, présentant une forme de U inversé et dont la section est croissante d'une bordure transversale 10' à l'autre 11'. Ces profilés métalliques de renfort sont collés sur la face intérieure des structures de chevron 12' et 14'.

Cette plaque autoporteuse 7' est posée et fixée sur la structure de charpente d'une manière identique à celle décrite précédemment en relation avec les plaques 7.

De par sa conception, le dispositif support 3 est étanche et il assure l'écoulement des eaux de pluie passant entre les panneaux photovoltaïques 5 ; il est très léger ce qui facilite les manipulations lors de la pose et ce qui limite le poids supporté par la charpente 2.
Le caractère rigide, résistant et autoporteur des plaques 7 autoporteuses permet une pose directe sur les pannes horizontales 4 de la charpente 2 et permet aux opérateurs de marcher directement sur la structure, lors de la pose. Les opérations de pose correspondantes sont très simples et très rapides à réaliser.

Ce dispositif support 3 constitue une solution d'étanchéité pour la pose de champs photovoltaïques sur les bâtiments de n'importe quelle pente de charpente (en particulier jusqu'à 8-10°).

## Revendications

1. Dispositif support pour la pose de panneaux solaires, **caractérisé en ce qu'**il comprend une juxtaposition de plaques parallélépipédiques autoporteuses (7, 7'), identiques, dont la face inférieure (18) est destinée à être fixée sur un bâti (2), par exemple la charpente d'une toiture, et dont la face supérieure (17) est destinée à être recouverte par des panneaux solaires (5), lesquelles plaques (7, 7') sont délimitées chacune par deux bordures transversales parallèles (10, 11 ; 10', 11') et par deux bordures longitudinales parallèles (8, 9 ; 8', 9'), lesquelles bordures longitudinales (8, 9 ; 8', 9') comportent, sur toute leur longueur, une structure de chevron (12, 16 ; 12', 16') en saillie vers le haut, lesquelles structures de chevron (12, 16 ; 12', 16') ont une section en U inversé qui est croissante d'une bordure transversale (10, 10') à l'autre (11, 11'), formant une structure dite en queue de billard pour permettre un recouvrement partiel desdites plaques (7, 7') au niveau de leurs bordures transversales (10, 11 ; 10', 11'), la section intérieure de l'une desdites structures de chevron (12, 12'), dite chevron latéral de grande dimension correspondant, au jeu près, à la section extérieure de l'autre structure de chevron (16, 16'), dite chevron latéral de petite dimension, pour permettre un recouvrement partiel desdites plaques (7, 7') au niveau de leurs bordures longitudinales (8, 9 ; 8', 9'), par encastrement dudit chevron latéral de petite dimension (16, 16') au sein dudit chevron latéral de grande dimension (12, 12').

2. Dispositif selon la revendication 1, **caractérisé en ce qu'**il comprend des plaques autoporteuses (7, 7') munies, entre leurs deux structures de chevron latérales (12, 16 ; 12', 16') d'au moins une structure de chevron complémentaire (13, 14, 15 ; 14'), également en U inversé, parallèle(s) auxdites structures de chevron latérales (12, 16 ; 12', 16') et de forme générale également en queue de billard, l'une au moins desdites structures de chevron complémentaires (14, 14') ayant une hauteur identique à celle du chevron latéral de grande dimension (12, 12').

3. Dispositif selon la revendication 2, **caractérisé en ce qu'**il comprend des plaques autoporteuses (7') munies de nervures de rigidification (30) ménagées entre leurs structures de chevron (12', 14', 16').

4. Dispositif selon la revendication 3, **caractérisé en ce qu'**au moins certaines desdites nervures de rigidification (30) s'étendent selon une direction perpendiculaire aux structures de chevron (12', 14', 16').

5. Plaque pour dispositif support selon l'une quelconque des revendications 1 à 4, laquelle plaque (7, 7') est délimitée par deux bordures transversales parallèles (10, 11 ; 10', 11') et par deux bordures longitudinales parallèles (8, 9), lesquelles bordures longitudinales (8, 9 ; 8', 9') comportent, sur toute leur longueur, une structure de chevron (12, 16 ; 12', 16') en saillie vers le haut, lesquelles structures de chevron (12, 16 ; 12', 16') ont une section en U inversé qui est croissante d'une bordure transversale (10, 10') à l'autre (11, 11') formant une structure dite en queue de billard pour permettre un recouvrement partiel de deux plaques (7, 7') identiques au niveau de leurs bordures transversales (10, 11 ; 10', 11'), la section intérieure de l'une desdites structures de chevron (12, 12'), dite chevron latéral de grande dimension, correspondant, au jeu près, à la section extérieure de l'autre structure de chevron (16, 16'), dite chevron latéral de petite dimension, pour permettre un recouvrement partiel de deux plaques (7, 7') identiques, au niveau de leurs bordures longitudinales (8, 9 ; 8', 9'), par encastrement dudit chevron latéral de petite dimension (16, 16') de l'une desdites plaques (7, 7') au sein dudit chevron latéral de grande dimension (12, 12') de l'autre plaque (7, 7').

6. Plaque selon la revendication 5, **caractérisée en ce qu'**elle est munie, entre ses deux structures de chevron latérales (12, 16 ; 12', 16'), d'au moins une structure de chevron complémentaire (13, 14, 15 ; 14'), en U inversé, parallèle(s) auxdites structures de chevron latérales (12, 16 ; 12', 16') et de forme également en queue de billard, la ou l'une au moins desdites structures de chevron complémentaire (14, 14') ayant une hauteur identique à celle du chevron latéral de grande dimension (12, 12').

7. Plaque selon l'une quelconque des revendications 5 ou 6, **caractérisée en ce qu'**elle est munie de nervures de rigidification (30) ménagées entre ses structures de chevron (12', 14', 16').

8. Plaque selon la revendication 7, **caractérisée en ce qu'**au moins certaines desdites nervures de rigidification (30) s'étendent selon une direction perpendiculaire aux structures de chevron (12', 14', 16').

9. Plaque selon l'une quelconque des revendications 5 à 8, **caractérisée en ce qu'**au moins la structure de chevron latérale de grande dimension (12, 12') est équipée, côté intérieur, d'un insert métallique (22) de renfort à section en U.

10. Plaque selon la revendication 9, **caractérisée en ce que** toutes ses structures de chevron parallèles (12, 13, 14, 15 ; 12', 14') sont équipées, côté intérieur, d'un insert métallique de renfort (22), à section en U, à l'exception du chevron latéral de petite dimension (16, 16').

11. Plaque selon l'une quelconque des revendications 5 à 10, **caractérisée en ce qu'**elle est réalisée en résine armée de fibres de verre.

12. Plaque selon la revendication 11, **caractérisée en ce que** sa face supérieure est recouverte d'une couche de matériau protecteur (23).

13. Plaque selon l'une quelconque des revendications 5 à 10, **caractérisée en ce qu'**elle est réalisée par moulage de matière plastique.

14. Structure de toiture comportant un dispositif support (3) selon l'une quelconque des revendications 1 à 4, obtenu par un assemblage de plaques autoporteuses (7, 7') selon l'une quelconque des revendications 5 à 13, lequel dispositif support (3) est fixé sur une charpente (2), recouvert d'une juxtaposition de panneaux solaires (5) fixés sur les faces de dessus de certaines au moins des structures de chevron (12, 14, 16 ; 12', 14', 16') desdites plaques autoporteuses (7, 7').

15. Structure de toiture selon la revendication 14, **caractérisée en ce que** les panneaux solaires (5) sont fixés sur la juxtaposition de plaques autoporteuses (7, 7') au moyen de crochets (6) adaptés pour assurer un positionnement du type en écaille, avec un recouvrement partiel des panneaux amont sur les panneaux aval.
